# EUROPEAN PATENT SPECIFICATION

(11) **EP 0 755 647 B1**
(45) Date of publication and mention of the grant of the patent: **13.01.1999**
(21) Application number: 96830393.3
(22) Date of filing: 15.07.1996
(51) Int. Cl.: A47J 43/26

(54) **A universal nut-cracker**
Universeller Nussknacker
Casse-noix universel

(30) Priority: 27.07.1995 IT RM950514
(43) Date of publication of application: 29.01.1997
(73) Proprietor: Grossi, Imperio, 00192 Roma (IT)
(72) Inventor: Grossi, Imperio, 00192 Roma (IT)
(74) Representative: Gristina, Giorgio

(56) References cited:
- CH-A- 296 607
- DE-A- 2 702 888
- DE-A- 3 240 388
- DE-A- 4 341 276
- DE-B- 1 152 229
- DE-U- 9 304 944

## Description

The present invention relates to a nut-cracker.

As is known, traditional nut-crackers foresee two equal arms hinged at an end, having the respective inner sides indented and configured with respective raisings toward the inside of the so formed second kind lever to keep a walnut, a hazel-nut or other dried fruits therein to break the shell of the same by applying force on the arms themselves with fulcrum on the hinging end.

Generally nut-crackers foresee two raisings per arm, so as to define two receiving spaces of different sizes, increasing starting from the fulcrum, so as to be able to crack, for instance, in the one space, the first, the smaller one, a hazel-nut, in the other one, the second, the greater one, a walnut with a certain easiness.

For instance, document DE-A-32 40 388 (Wolff) discloses a nut-cracker comprising a first and a second arm hinged at an end to form a second kind lever, both the first and the second arm having a first, working tract and a second handle tract. The working tracts are indented according to various geometries to firmly hold a dried fruit therebetween and easily crack it. The working tracts are also shown to be eventually double, that is with not one, but two movements of their profile in concavity, defining two cracking areas for dried fruits of different sizes. The two arms are shown to be equal to each other.

The present invention takes its steps from the remark that the two spaces of the present day nut-crackers of said type make up too a coarse division to easily crack dried fruits of different sizes.

In this connection, document DE-A-27 02 888 (Schmelow) discloses a nut cracker having a first and a second arm hinged at an end thereof, with an indented slider assembled adjustably in its position on the first arm, cantilevered therefrom towards the second arm through a connection with the first arm itself. The indented slider is intended to cooperate with an indented profile provided transversely on the second arm towards the hinging of the two arms. The indented slider can be positioned along the first, mounting arm as a function of the size of the fruit to be broken.

However, in Schmelow's nut-cracker, there is first the drawback that the force applied by the indented slider goes to unload itself on the connection thereof with the first arm, which connection so represents an element of constructive complication also in view of the fact that it will have to be able to support that force. A further constructive complication is inherent to the fact that another additional indented profile is necessary for cooperating with the indented slider, because the latter is not fit to cooperate with the indentation of the other arm, i.e. the one on which it is not assembled, it being not so arranged as to delimit, together with the first indented tract thereof, a space for receiving a dried fruit and crack it.

Anyhow, in Schmelow's nut-cracker the force applied normally to a dried fruit put between the indented slider and the indented profile is relatively poor, because the latter are transversely arranged to the arms of the nut-cracker. So, one has to apply a considerable force to crack a dried fruit, especially of a large size, and the cracking operation still remains not to be easy.

The end of the present invention is, therefore, to provide a nut-cracker that is universal, or that lends itself to crack dried fruit of any size in an easy way.

Hereinbelow the terminology will be used of the theory of simple machines whereby a lever is said to be of the second kind when the resisting force is positioned intermediate between the fulcrum of the lever and the driving force, the driving force representing an action on the lever, such as performed for instance by a hand, and the resisting force representing a reaction to be overcome or equilibrated by the action, such as that exerted by the shell of a dried fruit when one applies a force to crack it.

The above end of the present invention is reached with a nut-cracker comprising a first and a second arm, developed along a longitudinal direction, hinged at an end (O) to form a second kind lever, the first and the second arm having a first, bent tract (OF; OE) and a second, handle tract; said first tracts of the first and the second arm starting at said hinging end and terminating in two respective points that in the closing of the nut-cracker go into abutment; said first tracts of the first and the second arm, moreover, being indented by respective indentations transversal to the longitudinal direction of the arms; the first tract (OF) of said first arm being slightly bent;
characterized in that
the first tract (OE) of said second arm is substantially more bent than the first tract of said first arm; and in that on
said first tract of said first arm a slider (B) is assembled to be slideable and fixable in position along the said indentation thereof, the slider (B) being indented with an indentation;
and said indented slider (B) being fit for delimiting, together with the first tract of said second arm, a space for receiving a dried fruit and crack it by the application of a closing force on the handle tracts (M).

The present invention will be better understood based upon the following disclosure of its preferred embodiment, given only as a matter of example, absolutely not of restriction, with reference to the annexed drawings, wherein:
- FIGURE 1 represents the nut-cracker of the present invention in side view, with a fruit positioned to be cracked, and
- FIGURE 2 represents a right section view of the slider assembled on an arm of the nut-cracker of FIGURE 1.

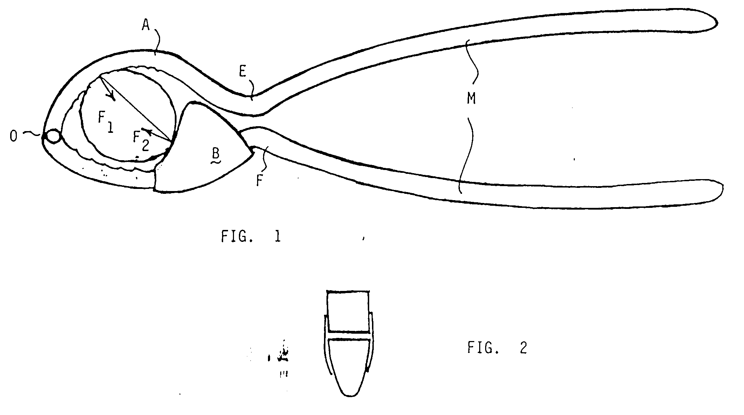

As depicted in FIGURE 1, the nut-cracker according to the teaching of the present invention has the lower arm with a first tract OF having a slight bend, as can be found in traditional nut-crackers. The upper arm has a corresponding tract OE that presents a considerably more emphasized bend. Points E and F in the closing of the nut-cracker come into abutment. The two arms continue besides points E and F in handles M onto which one can apply the cracking force (the power for the so made second kind lever). The inner sides of the tracts OE, OF are indented. On arm OF a slider B can slide, which can bring itself from the neighbourhood of F to the neighbourhood of O and vice-versa, the indentations performing an anti-slip function. Slider B has a peculiar shape, comparable, in its profile, to a curvilinear triangle with a beveled vertex and with a side of such a shape as to receive and push a dried fruit against arm OE. As depicted in FIGURE 2, arm OF, like arm OE and handles M, has a right section like an isosceles trapezium turned upside down. Slider B has generally square section with two weled side plaques B', B'' in such a shape as to embrace the sides of arm OF which supports the slider B itself.

Having disclosed the constitution of the nut-cracker according to the teaching of the present invention, the operation thereof is now disclosed.

Slider B when brought to the neighbourhood of F delimitates a space indicated by segment P, large enough to include a dried fruit of a greater diametre.

Intermediate positions between O and F will be suitable for fruits of intermediate size.

For the disclosed constitution and the mode of operation, the following results.

Arms M can operate with minimum straddle, because the useful space for the cracking is delimited by displacing slider B.

Arms M, as they can operate with minimum straddle, can be largely dimensioned, with a length consequently larger than classic nut-crackers, because they can be always easily grasped with the hands. In this way, the nut-cracker of the present invention as a lever presents an advantage greater than traditional nut-cracker, by advantage of the lever the ratio being meant of the power arm to the resistance arm, that is to say it is possible to win the same resistance with a lesser effort.

As depicted in FIGURE 1, the forces that turn out to be applied on the dried fruit are F₁ by the upper arm OE and F₂ by the slider. These constraint forces are respectively perpendicular to the arm and to the slider, and generally will not lie on the same action line. Therefore they give rise to a couple on the fruit, which, moreover, tends to rotate the same, aiding the opening of the shell.

Finally, as arms M can operate with minimum straddle, soon they stop at the contact of points E and F and thereby they crack, but do not break the fruit into shivers.

Therefore, the disclosed nut-cracker reaches the ends of the present invention.

The present invention has been disclosed and depicted with reference to a specific embodiment thereof, but it is to be expressedly understood that variations, additions and/or omissions can be made, without so departing from the relevant scope of protection, which remains only defined by the appended claims.

## Claims

1. A nut-cracker comprising a first and a second arm, developed along a longitudinal direction, hinged at an end (O) to form a second kind lever, the first and the second arm having a first, bent tract (OF; OE) and a second, handle tract; said first tracts of the first and the second arm starting at said hinging end and terminating in two respective points that in the closing of the nut-cracker go into abutment; said first tracts of the first and the second arm, moreover, being indented by respective indentations transversal to the longitudinal direction of the arms; the first tract (OF) of said first arm being slightly bent;
characterized in that
the first tract (OE) of said second arm is substantially more bent than the first tract of said first arm; and in that on
said first tract of said first arm a slider (B) is assembled to be slideable and fixable in position along the said indentation thereof, the slider (B) being indented with an indentation;
and said indented slider (B) being fit for delimiting, together with the first tract of said second arm, a space for receiving a dried fruit and crack it by the application of a closing force on the handle tracts (M).

## Patentansprüche

1. Ein Nußknacker der einen ersten und einen zweiten Arm, die eine longitudinale Richtung entlang fortschreiten sich und an einem Ende (O) um einen Hebel zweiter Art zu bilden verboltzt sind einschliesst, dessen erste und zweite Arm ein erstes gebeugt Stück (OF; OE) und ein zweites Handgriffstück haben; die ersten Stücke des ersten und des zweiten Armes beginnen am Verbozenende und onden an zwei bezüglichen Stellen die wenn der Nußcnacker geschlossen ist übereinanderlegen; die ertsen Stücke des ersten und des zweiten Armes sind gezackt ausserdem mit bezüglichen Zacken die querlaufend zu der longitudinalen Richtung der Arme sind; das erste Stück (OF) des ersten Armes ist leicht gebeugt;
dadurch gekennzeichnet, daß
das erste Stück (OE) des zweiten Armes wesentlich gebeugter als das erste Stück des ersten Armes ist;
und daß über dem orsten Stück des ersten Armes ein Gleitstück (B), das gleitend und verklemmenbar an einer Stellung das Zacken entlang ist, zusammengesetzt ist, und das Gleitstück (B) ein Zacken hat,
und daß das gezackte Gleitstück (B), zusammen mit dem ersten Stück des zweiten Armes, um einen Raum um ein Trockenobst zu aufnehmen und mit dem Auflegen von einer Schliessungkraft über dem Handgriffstück (M) zu brechen zu begrenzen geignet ist.

## Revendications

1. Casse-noisettes comprenant un premier et un deuxième bras, développés le long d'une direction longitudinale, mis en charnière à une extrémité (O) pour former un levier de deuxième genre, le premier et le deuxième bras en ayant une première partie pliée (OF; OE) et une deuxième partie de poignée; les dites premières parties du premier et du deuxième bras en partant de la dite extremité do mise en charnière et en terminant en deux points respectifs lesquels dans la fermeture du casse-noisettes vont en battement; les dites premières parties du premier et du deuxième bras, de plus, en étant dentellé par des dentelles respectives transversales à la direction longitudinale des bras; la première partie (OF) du dit premier bras en étant légèrement plié;
caractérisé en ce que
la première partie (OE) du deuxième bras est substantiellement plus pliée que la première partie du dit premier bras; et en ce que sur la dite première partie du dit premier bras un curseur (B) est monté de façon à pouvoir glisser et être fixé en position le long de la dite dentelle de celui-ci, le curseur (B) en étant dentellé par une dentelle;
et le dit curseur dentellé (B) en étant apte à délimiter, avec la première partie du dit deuxième bras, un espace pour recevoir un fruit sec et casser celui-ci par l'application d'une force de fermeture sur les parties de poignée (M).
